# EUROPÄISCHE PATENTANMELDUNG

(11) **EP 3 597 513 A1**
(43) Veröffentlichungstag der Anmeldung: **22.01.2020**
(21) Anmeldenummer: 18184581.9
(22) Anmeldetag: 19.07.2018
(51) Int. Cl.: B62D 33/023, B60P 1/28

(54) **KIPPMULDE**

(71) Anmelder: Anhänger- und Fahrzeugbau Meierling GmbH, 58093 Hagen (DE)
(72) Erfinder: Emons, Daan Johannes Martinus Christiaan, 6604 GV Wijchen (NL)
(74) Vertreter: Patentanwälte Dörner & Kötter PartG mbB

(57) **Zusammenfassung**

Die Erfindung betrifft eine Kippmulde (1) für ein Transportfahrzeug, mit einem Kippmuldenkörper, der auf einer Bodenplatte (2) zwei gegenüberliegend angeordnete Seitenwände (3) aufweist, die endseitig über eine Rückwand (5) und Stirnwand (4) verbunden sind. Die Seitenwände (3) sind zumindest jeweils aus einem Rahmen (31) gebildet, der eine Faserverbundkunststoffplatte (32) einfasst. Die Erfindung betrifft weiterhin ein Transportfahrzeug mit einer solchen Kippmulde (1).

## Beschreibung

Die Erfindung betrifft eine Kippmulde für ein Transportfahrzeug nach dem Oberbegriff des Patentanspruchs 1.

Kippmulden für Transportfahrzeuge, beispielsweise Lastkraftwagen in Form einer Zugmaschine mit Kippsattelanhänger, werden zum Transport schüttfähiger Güter, wie beispielsweise Splitt, Kies oder Bauschutt eingesetzt. Die nach oben offene Kippmulde ist an ihrer der Zugmaschine zugewandten Seite durch eine Stirnwand verschlossen. Die der Stirnwand gegenüberliegende Seite der Kippmulde ist als Schüttöffnung ausgestaltet und regelmäßig über eine hochgezogene Schütte oder auch eine verriegelbare Klappe oder Tür verschlossen. In einer Beladungsposition ist die Kippmulde horizontal auf einem Fahrgestellrahmen des Transportfahrzeugs angeordnet. In dieser Lage kann die Kippmulde von oben mit den zu transportierenden Gütern beladen werden. Zum Entladen ist die Kippmulde um eine im hinteren Bereich des Fahrgestellrahmens angeordnete Querachse kippbar, sodass das Transportgut mittels Schwerkraft entlang der so schräg angestellten Bodenplatte der Kippmulde ausgeschüttet werden kann. Zum Kippen der Kippmulde sind an dem Fahrgestell Hubvorrichtungen, regelmäßig in Form von Hydraulikzylindern angeordnet, über welche die Kippmulde in eine Schrägstellung bzw. in die horizontale Beladestellung verbracht werden kann. Kippmulden der vorgenannten Art sind beispielsweise in der EP 1 319 584 B2 beschrieben.

Je nach zu transportierenden Schüttgut ist die maximale Ladekapazität einer Kippmulde durch das maximal zulässige Ladegewicht begrenzt, sodass deren maximales Ladevolumen häufig nicht vollständig genutzt werden kann. Vor diesem Hintergrund werden Kippmulden häufig aus Aluminiumwerkstoffen hergestellt, um durch eine Reduzierung des Eigengewichts der Kippmulde die maximale Ladekapazität zu erhöhen.

Hier setzt die vorliegende Erfindung an. Der Erfindung liegt die Aufgabe zu Grunde, eine Kippmulde für ein Transportfahrzeug bereitzustellen, deren Eigengewicht reduziert ist. Gemäß der Erfindung wird die Aufgabe durch eine Kippmulde mit den Merkmalen des kennzeichnenden Teils des Patentanspruchs 1 gelöst.

Mit der Erfindung ist eine Kippmulde für ein Transportfahrzeug bereitgestellt, deren Eigengewicht reduziert ist, wodurch deren maximales Ladegewicht erhöht ist. Dadurch, dass zumindest die Seitenwände jeweils aus einem Rahmen gebildet sind, der eine Faserverbundkunststoffplatte einfasst, ist gegenüber den im Stand der Technik bekannten Leichtbau-Kippmuldenkörpern aus Aluminium eine deutliche Gewichtsreduzierung erzielt. Über den die jeweilige Faserverbundkunststoffplatte einfassenden Rahmen ist eine einfache Montage der Seitenwände mittels bekannter Verbindungs- und Fügeverfahren wie Verschweißen oder Verschrauben der Rahmenprofilteile der Rahmen ermöglicht. Jedwede Bohrungen in den Faserverbundkunststoffplatten, die sich regelmäßig als Schwachstellen erweisen, sind nicht erforderlich. Die Kunststofffaserverbundplatten sind von dem jeweiligen Rahmen formschlüssig gehalten. Bevorzugt können die Platten auch in den Rahmenprofilteilen der Rahmen geklemmt sein, wodurch eine form- und kraftschlüssige Verbindung erzielt ist.

In Weiterbildung der Erfindung ist auch die Rückwand und / oder die Stirnwand aus einem Rahmen gebildet, der eine Faserverbundkunststoffplatte einfasst. Hierdurch ist eine weitere Gewichtsreduzierung der Kippmulde erzielt.

In Ausgestaltung der Erfindung ist der eine Kunststofffaserverbundplatte einfassende Rahmen der Seitenwände und / oder der Rückwand und / oder der Stirnwand zumindest teilweise aus einem Metallprofil, insbesondere einem Aluminiumprofil gebildet. Hierdurch ist die Montage der einzelnen Wände erleichtert. Zudem ist eine gute Stabilität der Kippmuldenkonstruktion erzielt.

In weiterer Ausgestaltung der Erfindung ist auch die Bodenplatte aus einem Rahmen gebildet, der eine Faserverbundkunststoffplatte einfasst. Hierdurch ist eine weitere Reduzierung des Eigengewichts der Kippmulde erzielt.

In Weiterbildung der Erfindung ist die Bodenplatte an wenigstens einer Seite, bevorzugt an ihren beiden Längsseiten mit jeweils einer Seitenwand durch ein gemeinsames Rahmenprofilteil eingefasst. Dabei ist das gemeinsame Rahmenprofilteil bevorzugt ein Kunststoffrahmenteil, insbesondere ein Kunststofffaserverbundkunststoffteil. Hierdurch ist eine elastische Verbindung zwischen Bodenplatte und Seitenwänden erzielt, wodurch der durch die Beladevorgänge der Kippmulde bedingte Verschleiß reduziert ist.

In Ausgestaltung der Erfindung sind die Querrahmenteile des Rahmens der Bodenplatte über ein Stützgerüst verbunden, auf dem die Faserverbundkunststoffplatte aufliegt. Hierdurch ist eine hohe Stabilität der Bodenplatte, insbesondere auch während eines Beladevorgangs gewährleistet.

In weiterer Ausgestaltung der Erfindung ist das Stützgerüst aus Metallprofilen, bevorzugt aus Aluminiumprofilen gebildet. Hierdurch ist eine hohe Stabilität, verbunden mit einem geringen Eigengewicht der Kippmulde bewirkt.

In Weiterbildung der Erfindung sind die Faserverbundkunststoffplatten aus einem Epoxid-, Polyester-, Vinylester, oder Hybridharz gebildet, in das Glasfasern und / oder Kohlefasern und / oder Aramidfasern eingebettet sind. Hierdurch sind hoch belastbare Faserverbundkunststoffplatten mit zugleich sehr geringem Eigengewicht realisiert. Dabei ist vorteilhaft wenigstens eine Faserverbundkunststoffplatte, bevorzugt jedoch alle Faserverbundkunststoffplatten als Sandwich-Verbundplatten ausgebildet, die einen Strukturkern aufweisen, der vorzugsweise als Schaumkern ausgebildet ist. Strukturelemente zur Verwendung als Kernschicht in einem Sandwich-Verbundelement sind beispielsweise in der EP 2 670 591 B1 beschrieben. Eine besonders hoch belastbare Ausführung von Bodenplatte und Seitenwänden wird durch den Einsatz von Faserverbundkunststoffplatten in Sandwichbauweise erzielt, die mit Verstärkungsnähten versehen sind, wodurch eine Delamination der Verbundkunststoffplatte vermieden ist. Solche Verbundkunststoffplatten in Sandwichbauweise sind beispielsweise in der WO 2017 / 095223 A1 beschrieben.

Andere Weiterbildungen und Ausgestaltungen der Erfindung sind in den übrigen Unteransprüchen angegeben. Ein Ausführungsbeispiel der Erfindung ist in den Zeichnungen dargestellt wird nachfolgend im Einzelnen beschrieben. Es zeigen:
Figur 1 die schematische Darstellung eines mit einer erfindungsgemäßen Kippmulde ausgestatteten Kippsattelanhängers;

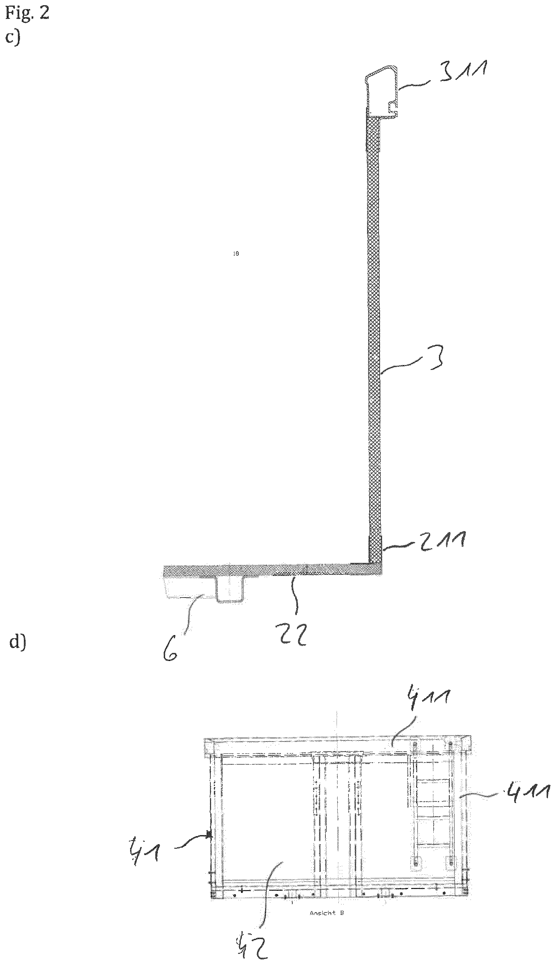

Figur 2 die schematische Darstellung der Kippmulde des Kippsattelanhängers aus Figur 1
   a) in der Seitenansicht;
   b) in der Ansicht von unten;
   c) in Schnitt A-A;
   d) in rückseitiger Ansicht;

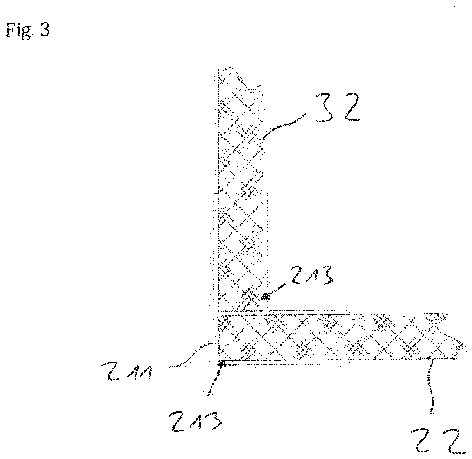

Figur 3 die schematische Darstellung des Untergurtprofils mit aufgenommenen Faserverbundkunststoffplatten der Bodenplatte und einer Seitenwand der Kippmulde aus Figur 2.

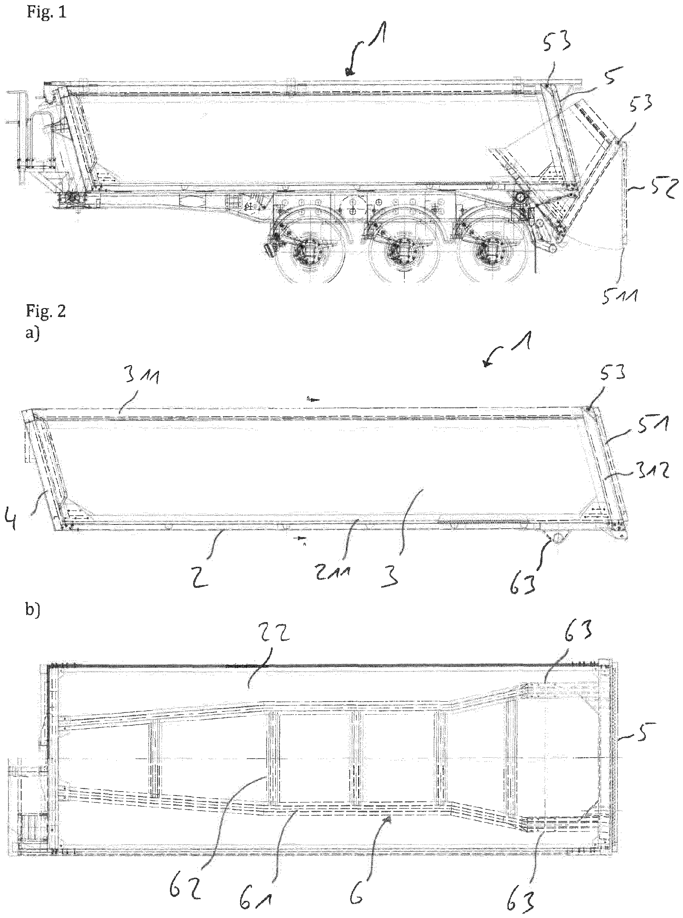

Die als Ausführungsbeispiel gewählte Kippmulde 1 weist zwei auf einer Bodenplatte 2 gegenüberliegend angeordnete Seitenwände 3 auf, die an einem Ende über eine Rückwand 5 und an dem dieser gegenüberliegenden Ende über eine Stirnwand 4 verbunden sind, wodurch ein nach oben offener Behälter gebildet ist. In Figur 1 ist ein mit dieser Kippmulde 1 ausgerüsteter Kippsattelanhänger gezeigt.

Die Bodenplatte 2 ist im Wesentlichen rechteckig ausgebildet und umfasst einen Rahmen 21, der Faserverbundkunststoffplatte 22 aufnimmt. Der Rahmen 21 ist aus zwei längs verlaufenden Untergurtprofilen 211 gebildet, die über zwei Querrahmenprofile 212 verbunden sind. Die Untergurtprofile 211 sind als Faserverbundkunststoffteil ausgebildet und weisen zwei lotrecht zueinander angeordnete, U-förmige Nuten 213 zur Aufnahme der Faserverbundkunststoffplatte 22 der Bodenplatte 2 einerseits und der Faserverbundkunststoffplatte 32 einer Seitenwand 3 andererseits auf. Die Querrahmenprofile 212 sind aus Aluminium hergestellt und weisen eine U-förmige Nut zur Aufnahme der Faserverbundkunststoffplatte 22 der Bodenplatte 2 auf. Im Ausführungsbeispiel ist die Faserverbundkunststoffplatte 22 der Bodenplatte 2 in den Nuten 213 der Untergurtprofile 211 und der Querrahmenprofile 212 klemmend gehalten und zusätzlich mit diesen verklebt.

Auf ihrer den Seitenwänden 3 abgewandten Unterseite sind die Querrahmenprofile 212 über die Längsträger 61 eines Stützgerüsts 6 verbunden, die wiederum über beabstandet zueinander angeordnete Querträger 62 miteinander verbunden sind. An den Längsträgern sind gegenüberliegend zwei Achsflansche 63 zur Durchführung einer Schwenkachse des Kippsattelanhängers befestigt, über welche die Kippmulde kippbar ist.

Die Seitenwände 3 sind ist im Wesentlichen in Form eines Parallelogramms ausgebildet und umfassen jeweils einen Rahmen 31, der eine Faserverbundkunststoffplatte 32 aufnimmt. Der Rahmen 31 ist aus einem längs verlaufenden, aus Aluminium hergestellten Längsprofil 311 gebildet, an das sich endseitig zwei ebenfalls aus Aluminium hergestellte Querrahmenprofile 312 anschließen, die wiederum durch ein zugleich die Faserverbundkunststoffplatte 22 der Bodenplatte 2 aufnehmendes Untergurtprofil 211 verbunden sind.

Die Stirnwand 4 ist im Wesentlichen rechteckig ausgebildet und umfasst einen Rahmen 41, der eine Faserverbundkunststoffplatte 42 aufnimmt. Der Rahmen 41 ist aus vier aus Aluminium hergestellten, jeweils mit einer U-förmigen Längsnut versehenen Rahmenprofilen 411 gebildet. Die Faserverbundkunststoffplatte 42 ist in den Längsnuten der Rahmenprofile 41 klemmend gehalten. Der Rahmen 41 der Stirnwand 4 ist zwischen zwei gegenüberliegend angeordneten Querrahmenprofilen 312 der Rahmen 31 der Seitenwände 3 sowie auf einem Querrahmenprofil 212 des Rahmens 21 der Bodenplatte 2 angeordnet und mit diesen verschweißt.

Die Rückwand 5 ist entsprechend der Stirnwand 4 im Wesentlichen rechteckig ausgebildet und umfasst einen Rahmen 51, der eine Faserverbundkunststoffplatte 52 aufnimmt. Der Rahmen 51 ist ebenfalls aus vier aus Aluminium hergestellten, mit einer U-förmigen Längsnut versehenen Rahmenprofilen 511 gebildet. Die Faserverbundkunststoffplatte 52 ist in den Längsnuten der Rahmenprofile 51 klemmend gehalten. Die Rückwand 5 ist über eine endseitig zwischen den Rahmen 31 der Seitenteile 3 angeordnete Achse 53 schwenkbar mit diesen verbunden, wodurch die Rückwand 5 als Verschlussklappe fungiert.

Die Faserverbundkunststoffplatten der Bodenplatte 2, der Seitenwände 3, der Rückwand 5 sowie der Stirnwand 4 sind im Ausführungsbeispiel, wie in der WO 2017/095223 A1 beschrieben, als Sandwichkonstruktion aus mit Kohlefasern verstärktem Polyester und hartem Polyurethanschaumkern gebildet. Dabei sind die kohlefaserverstärkten Polyesterlagen über durch den Polyurethanschaumkern geführte Verstärkungsnähte miteinander verbunden. Die erfindungsgemäße Kippmulde weist ein gegenüber Aluminium-Kippmulden des Standes der Technik um 25% bis 30% geringeres Eigengewicht auf.

## Patentansprüche

1. Kippmulde für ein Transportfahrzeug, mit einem Kippmuldenkörper, der auf einer Bodenplatte (2) zwei gegenüberliegend angeordnete Seitenwände (3) aufweist, die endseitig über eine Rückwand (5) und Stirnwand (4) verbunden sind, **dadurch gekennzeichnet, dass** zumindest die Seitenwände (3) jeweils aus einem Rahmen (31) gebildet sind, der eine Faserverbundkunststoffplatte (32) einfasst.

2. Kippmulde nach Anspruch 1, **dadurch gekennzeichnet, dass** die Rückwand (5) und/oder die Stirnwand (4) aus einem Rahmen (51, 41) gebildet ist, der eine Faserverbundkunststoffplatte (52, 42) einfasst.

3. Kippmulde nach Anspruch 1 oder 2, **dadurch gekennzeichnet, dass** der eine Kunststofffaserverbundplatte (32, 42, 52) einfassende Rahmen (31, 41, 51) der Seitenwände (3) und/oder der Rückwand (5) und/oder der Stirnwand (4) zumindest teilweise aus einem Metallprofil, insbesondere einem Aluminiumprofil gebildet ist.

4. Kippmulde nach einem der vorgenannten Ansprüche, **dadurch gekennzeichnet, dass** die Bodenplatte (2) aus einem Rahmen (21) gebildet ist, der eine Faserverbundkunststoffplatte (22) einfasst.

5. Kippmulde nach Anspruch 4, **dadurch gekennzeichnet, dass** die Bodenplatte (2) an wenigstens einer Seite, bevorzugt an zwei Seiten mit einer Seitenwand (3) durch ein gemeinsames Rahmenprofilteil (211) eingefasst ist.

6. Kippmulde nach Anspruch 5, **dadurch gekennzeichnet, dass** das gemeinsame Rahmenprofilteil (211) ein Kunststoffteil, bevorzugt ein Kunststofffaserverbundstoffteil ist.

7. Kippmulde nach einem der Ansprüche 4 bis 6, **dadurch gekennzeichnet, dass** die Querrahmenprofile (212) des Rahmens (21) der Bodenplatte (2) über ein Stützgerüst (6) verbunden sind, auf dem die Faserverbundkunststoffplatte (21) aufliegt.

8. Kippmulde nach Anspruch 7, **dadurch gekennzeichnet, dass** das Stützgerüst (6) aus Metallprofilen, bevorzugt aus Aluminiumprofilen gebildet ist.

9. Kippmulde nach einem der vorgenannten Ansprüche, **dadurch gekennzeichnet, dass** die Faserverbundstoffplatten (22, 32, 42, 52) aus einem Epoxid-, Polyester-, Vinylester- oder Hybridharz gebildet sind, in das Glasfasern und/oder Kohlefasern und/oder Aramidfasern eingebettet sind.

10. Kippmulde nach einem der vorgenannten Ansprüche, **dadurch gekennzeichnet, dass** wenigstens eine Faserverbundstoffplatte, bevorzugt alle Faserverbundkunststoffplatten (22, 32, 42, 52) als einen Schaumkern aufweisende Sandwich-Verbundplatten ausgebildet sind.

11. Transportfahrzeug, insbesondere Kippsattelanhänger, **dadurch gekennzeichnet, dass** dieses eine Kippmulde nach einem der vorgenannten Ansprüche aufweist.
